# EUROPEAN PATENT APPLICATION

(11) **EP 2 254 327 A1**
(43) Date of publication of application: **24.11.2010**
(21) Application number: 09160817.4
(22) Date of filing: 20.05.2009
(51) Int. Cl.: H04N 1/387, G06F 17/21

(54) **System for generating ready-to-print documents**

(71) Applicant: BGS Crossmedia Sarl, 5616 Mondorf Les Bains (LU)
(72) Inventor: Bloch, Jérôme, 1243, LUXEMBOURG (LU)
(74) Representative: Office Freylinger

(57) **Abstract**

A system for generating ready-to-print documents, comprises:
• a first content store for storing content files,
• a user interface, said user interface for enabling a user to upload content files into the first content store;
• a certification module for generating, upon request of a user, a certificate with respect to a content file stored into said first content store, said certificate being related to at least one characteristic of said content file and said certificate being associated to said content file in order to form a certified content file,
• a second content store for storing said certified content file, and
• an output module for enabling access to said certified content file in said second content store.

In a preferred embodiment, the system further comprises a template store for storing document templates. These templates may be accessed and used for assembling content files into final documents to be published.

## Description

### Technical field

The present invention generally relates to a system for generating ready-to-print documents.

### Background Art

According to the classical approach for generating printed documents, the user who wants to have a document printed, assembles the content (text, images and the like) of the document into a first draft document. This draft document is transmitted to the publisher or the printing house, where the document is checked and reworked by means of specific publishing software. During this step, the quality, resolution, format etc., of the text files and/or the image files are checked for compliance with minimum standards in order to guarantee the desired printing quality. After that, the publisher generates a pre-print document, which is sent to the client for verification and approval.

Alternatively, the user sends the different content files (text, images and the like) separately to the publisher, which assembles the content to a document to be printed. After checking for compliance with the minimum requirements, the publisher then generates a pre-print document, which is sent to the client for verification and approval.

In both cases, the pre-print document is necessary in order to allow the client to certify, that the layout of the document is correct and that the quality of images corresponds to his expectations. After the client has checked the pre-print document, he puts his imprimatur on the pre-print document and transmits his approval to the publisher, which can start the actual printing work only after the receipt of the approval.

It is clear that the requirement of the pre-print document to be sent to the client and the subsequent retransmission of the imprimatur to the publisher is very time consuming and does not comply with the ever-increasing need for flexibility and rapidity.

### Technical problem

It is therefore an object of the present invention to provide an improved system for the generation of ready-to-print documents.

### General Description of the Invention

To achieve this object, the present invention proposes a system for generating ready-to-print documents, comprising:
- a first content store for storing content files,
- a user interface, said user interface for enabling a user to upload content files into the first content store;
- a certification module for generating, upon request of a user, a certificate with respect to a content file stored into said first content store, said certificate being related to at least one characteristic of said content file and said certificate being associated to said content file in order to form a certified content file,
- a second content store for storing said certified content file, and
- an output module for enabling access to said certified content file in said second content store.

With the above system, the user may request a certification for the content files and thereby obtain a certification regarding certain characteristics of the content files prior to the transmission thereof to the publisher or printing house. In doing so, the user may state his approval to the printing of the certified content files without the need for the supplementary steps related to the pre-printing document.

The publisher on his end does not need to verify compliance of the received certified content files with the certified minimum standards. He can rely on the certification generated by the system and proceed immediately to the printing of the certified content. Accordingly the time consuming step of generating and transmitting a pre-printing document and the monitoring of the receipt of the subsequent approval by the client is no longer required. The printing process is thus greatly accelerated.

It will be noted that the certificate generated by the certification module of the above-described system can be related to one or more characteristics or properties of the content file. For text files, the certification may e.g. relate to the author, the copyright (i.e. the user certifies that he owns the copyright to the text), to the font and font size, to the overall size etc. The certificate can relate to one or more to these properties, depending on the requirements at the user's end and/or at the publisher's end. In the case of image files and video or sound files, the certificate may relate to the copyright, to the size of the image, to the resolution or quality, the format or the like.

It will furthermore be appreciated, that the system may be configured to provide various types of certifications. A first type of certification is for instance a self-certification by the user itself, i.e. the user certifies certain properties of the content file. Another type of certificate may be a issued by a third party, which verifies the properties to certify prior to issuing the certificate. The third party may be an independent service provider or certification authority or an official authority or organism. With such a system, the user may thus request various levels of certification, depending on the requirements at the user's end and/or at the publisher's end.

The skilled person will appreciate, that the present invention is suitable to be implemented on a web based infrastructure, with the content stores and the certification modules implemented on one ore more web servers. Such an implementation makes the use of the system particularly simple, as the user and/or the publisher only need a simple Internet access in order to communicate with the system. It is of course obvious that in such an Internet based system appropriate measures have to be taken on the user interface and on the output module, to grant access only to the authorized parties. Such authorization modules are common standard practice and do not need to be described in further detail.

The skilled person will further note that although the invention is described having a first and a second content store, these first and second content stores do not necessarily need to be implemented by separate physical storage modules. As a matter of fact, the different content stores may be configured as parts of a single physical storage module with an associated database for controlling the content files in the different stores.

In a preferred embodiment of the invention, the certified content in said second content store is protected against modifications. This protection against modifications prohibits that the certified characteristics of the content files are modified after the certification. It follows that the receiving party can rely on the certification and can thus be sure that the properties of the content file correspond to the certified properties.

Il will be appreciated that the non-certified original content file may remain in the first content store even after a certified version of the content file has been stored in the second content store. The owner of the content file may then access his non-certified original content file, modify the file and request a new certificate for the modified file.

In a possible embodiment of the invention, said certificate is stored together with the original content in a single certified content file. Alternatively, said certificate is stored in a separate file, which is associated with said content file or simply into a database containing the content file as such. In both cases, the certificate is preferably irrevocably associated to the content file, so that the file is not modifyable after certification.

In a preferred embodiment of the invention, the system further comprises a template store for storing document templates. In this case, the output module is preferably configured for enabling access to document templates stored in said template store. The authorized party, e.g. the publisher which has been granted access, may then access the required templates together with the certified content and use both the template and the certified content to assemble the final document to be printed.

In another embodiment, the system further comprises an assembling module configured for assembling document templates stored in said template store and certified content stored in said second content store to finished documents. In that case said output module is configured for enabling access to said finished documents. In this case, the assembly of the final document occurs on a server of the system, either under the control of the owner of the files or, if corresponding authorization is granted, under the control of the end user or publisher.

The assembling module may be implemented separately from the output module or it may be integrated into the latter. Furthermore it will be noted that in this embodiment, the output module may also enable access to the individual certified content file or template.

It should be clear that the document templates and the content files to be assembled have to be compatible with one another in order to allow assembling of the template and the documents without further modification of verification of the content files. Thus the template store preferably contains various types of document templates for the different kinds of content files.

It will further be appreciated that in both cases the template may be certified itself, so that certain properties of the template are granted. The templates itself may relate to any publishable documents which include printable documents such as books, magazines, brochures or the like and documents to be published online e.g. on the Internet or an intranet or the like.

Finally it will be noted that the content files may comprise any digital content, such as image files and/or text files and/or video files and/or sound files.

### Brief Description of the Drawings

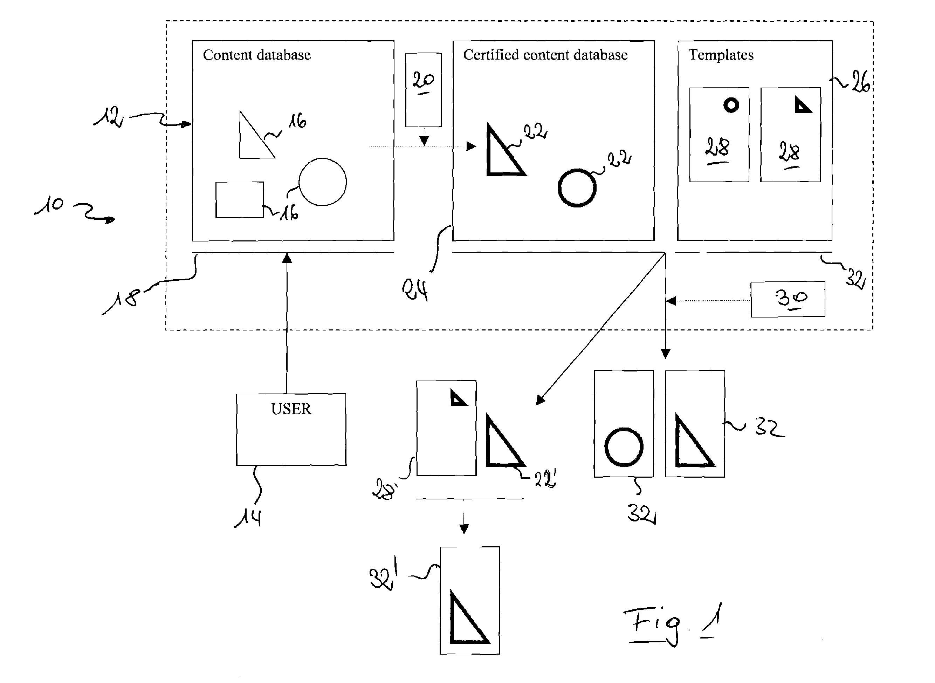

A preferred embodiment will now be described, by way of example, with reference to the accompanying Fig. 1, which is a block schematic diagram of a system for generating ready-to-print documents.

### Description of Preferred Embodiments

Fig. 1 shows a block schematics diagram of an embodiment of a system 10 for generating ready-to-print documents. The shown system 10 comprises a first content store or content database 12, into which a user 14 can upload content files 16 via a user interface 18. The content files may comprise any digital content such as text files, images, video or sound files or the like.

Under the request of the user 14, a certification module 20 generates a certificate with respect to a content file 16 stored into said first content store or database 12. The certificate is related to at least one characteristic (such as format, size, resolution, copyright, etc.) of said content file 16. This certificate is associated to the content file 16 in order to form a certified content file 22. The certificate may be stored together with the original content in the certified content file 22 or it may be stored in a separate file, which is associated with said content file.

The certified content file 22 is then transferred into a second content store 24 for storing said certified content files 22. The certified content files 22 are preferably stored in non-modifyable form, so that the content file may not be altered and that the certified characteristic is granted.

The system 10 further comprises a document template store 26 for storing predefined document templates 28, which may be used for generating finished documents together with the certified content files 22.

Upon request from an authorized party, one or more certified content files 22 may be assembled with a template 28 under the control of an assembling module 30 in order to form a finished ready-to-print document 32. These ready-to-print documents 32 may then be accessed (e.g. downloaded) via an output module 32 of the system. Alternatively, the certified content files 22' and the templates 28' may be individually accessed and downloaded, and the ready-to-print document 32' may be assembled outside of the system 10.

## Claims

1. A system for generating ready-to-print documents, comprising:
a first content store for storing content files,
a user interface, said user interface for enabling a user to upload content files into the first content store;
a certification module for generating, upon request of a user, a certificate with respect to a content file stored into said first content store, said certificate being related to at least one characteristic of said content file and said certificate being associated to said content file in order to form a certified content file,
a second content store for storing said certified content file, and
an output module for enabling access to said certified content file in said second content store.

2. The system according to claim 1, wherein said certified content in said second content store is protected against modifications.

3. The system according to any one of claims 1 or 2, wherein said at least one characteristic comprises a format, a resolution, a quality, a size, an information regarding author of copyright, a font or font size.

4. The system according to any one of claims 1 to 3, wherein said certificate is stored together with the original content in a single certified content file.

5. The system according to any one of claims 1 to 3, wherein said certificate is stored in a separate file, which is associated with said content file.

6. The system according to any one of claims 1 to 5, further comprising a template store for storing document templates, and wherein said output module is configured for enabling access to document templates stored in said template store.

7. The system according to any one of claims 1 to 6, further comprising an assembling module configured for assembling document templates stored in said template store and certified content stored in said second content store to finished documents and wherein said output module is configured for enabling access to said finished documents.

8. The system according to any one of claims 6 to 7, wherein said document templates relate to printable documents and/or to documents to be published on the internet.

9. The system according to any one of claims 1 to 8, wherein said content files comprise image files and/or text files and/or video files and/or sound files.
